(19) **Europäisches Patentamt**
**European Patent Office**
**Office européen des brevets**

(11) **EP 4 377 715 B1**

(12) **EUROPÄISCHE PATENTSCHRIFT**

(45) Veröffentlichungstag und Bekanntmachung des Hinweises auf die Patenterteilung:
**06.05.2026   Patentblatt 2026/19**

(21) Anmeldenummer: **22743445.3**

(22) Anmeldetag: **29.06.2022**

(51) Internationale Patentklassifikation (IPC):
**G01S 15/87** (2006.01)     **G01S 15/88** (2006.01)
**G01S 15/931** (2020.01)     **G01S 7/539** (2006.01)
**G01S 15/86** (2020.01)

(52) Gemeinsame Patentklassifikation (CPC):
**G01S 15/876; G01S 7/539; G01S 15/88;**
**G01S 15/931;** G01S 15/86; G01S 2015/932

(86) Internationale Anmeldenummer:
**PCT/DE2022/200146**

(87) Internationale Veröffentlichungsnummer:
**WO 2023/006156 (02.02.2023 Gazette 2023/05)**

(54) **VERFAHREN ZUR HÖHENSCHÄTZUNG VON OBJEKTEN MITTELS ULTRASCHALLSENSORIK**

HEIGHT ESTIMATION METHOD FOR OBJECTS BY MEANS OF ULTRASONIC SENSOR SYSTEM

PROCÉDÉ D'ESTIMATION DE LA HAUTEUR D'OBJETS AU MOYEN D'UN SYSTÈME DE CAPTEURS À ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **27.07.2021   DE 102021208072**

(43) Veröffentlichungstag der Anmeldung:
**05.06.2024   Patentblatt 2024/23**

(73) Patentinhaber: **AUMOVIO Autonomous Mobility Germany GmbH**
**85057 Ingolstadt (DE)**

(72) Erfinder:
• **SULEIMAN, Wassim**
**90411 Nürnberg (DE)**
• **BROWN, Christopher**
**90411 Nürnberg (DE)**
• **GLATZ, Nicolai**
**90411 Nürnberg (DE)**

(74) Vertreter: **Aumovio Corporation**
**AUMOVIO Germany GmbH**
**Taunusstraße 36**
**80807 München (DE)**

(56) Entgegenhaltungen:
**DE-A1- 10 151 965        DE-A1- 102014 114 999**
**DE-A1- 102018 218 007**

**Beschreibung**

Die Erfindung betrifft ein Verfahren zur Höhenschätzung von Objekten im Umgebungsbereich von Fahrzeugen mittels einer Ultraschallsensorik.

Es ist bekannt, Umgebungsinformationen im Bereich eines Fahrzeugs mittels Ultraschallsensoren zu erfassen, beispielsweise um beim Einparken den Abstand zu anderen Objekten zu erfassen. Ultraschallsensoren liefern basierend auf der Laufzeit des Ultraschallsignals Abstandsinformationen, jedoch keine direkten Höheninformationen des detektierten Objekts, da der Empfangswinkel, aus dem die Rückreflexion erfolgt, nicht ermittelbar ist.

Es ist jedoch bekannt, die Höhe des Objekts, an dem die Reflexion erfolgt, durch Auswertung der geometrischen Zusammenhänge aus mehreren Sende-Empfangszyklen zu ermitteln. So kann beispielsweise bei einer Bewegung des Fahrzeugs zwischen den beiden Sende-Empfangszyklen durch Auswertung der gemessenen Abstandsinformationen zwischen dem Ultraschallsensor und dem reflektierenden Objekt und einer Distanzinformation, die den Abstand der Sensorpositionen des Ultraschallsensors in horizontaler Richtung entlang der Ausbreitungsrichtung des Ultraschallsignals zwischen dem Ultraschallsensor und dem reflektierenden Objekt angibt, die Höhe des Objekts berechnet werden.

Ein solches Verfahren ist beispielsweise aus DE 101 51 965 A1 bekannt. Ähnliche Verfahren finden sich in DE 10 2018 218007 A1 und in DE 10 2014 114999 A1.

Problematisch dabei ist, dass sich durch Rauschen häufig schlechte Messergebnisse ergeben, die zu einer unzureichenden Höhenschätzung mit hohen Abweichungen führen.

Ausgehend hiervon ist es Aufgabe der Erfindung, ein Verfahren zur Höhenschätzung von Objekten im Umgebungsbereich von Fahrzeugen mittels Ultraschallsensorik anzugeben, das eine zuverlässige Schätzung der Höhe des reflektierenden Objekts erlaubt.

Die Aufgabe wird durch ein Verfahren mit den Merkmalen des unabhängigen Patentanspruchs 1 gelöst. Bevorzugte Ausführungsformen sind Gegenstand der Unteransprüche. Ein System zur Höhenschätzung eines Objekts ist Gegenstand des nebengeordneten Patentanspruchs 15.

Gemäß einem ersten Aspekt bezieht sich die Erfindung auf ein Verfahren zur Höhenschätzung eines Objekts mittels einer Ultraschallsensorik eines Fahrzeugs. Das Verfahren umfasst die folgenden Schritte:
Zunächst werden zumindest zwei Ultraschallsignale durch zumindest einen Ultraschallsensor empfangen. Dabei kann ein einziger Ultraschallsensor aufgrund einer Fahrzeugbewegung unterschiedliche Sensorpositionen relativ zum Objekt aufweisen. In anderen Worten werden also Empfangsinformationen eines einzelnen Ultraschallsensors ausgewertet, der aufgrund der Fahrzeugbewegung an zeitlich aufeinanderfolgenden Messzyklen unterschiedliche Positionen relativ zum Objekt, dessen Höhe ermittelt werden soll, einnimmt. Alternativ können auch mehrere Ultraschallsensoren die zumindest zwei Ultraschallsignale empfangen, wobei diese aufgrund der Fahrzeugbewegung und/oder einer unterschiedlichen Anordnung am Fahrzeug unterschiedliche Sensorpositionen relativ zum Objekt aufweisen.

Anschließend wird eine erste Höheninformation berechnet, die ein Maß für die quadrierte Höhe des Objekts ist. Die Höhe des Objekts ist dabei vorzugsweise die relative Höhe des Objekts zu der Einbauhöhe des zumindest einen Ultraschallsensors an dem Fahrzeug. In anderen Worten wird damit nicht direkt die Höhe des Objekts bestimmt, sondern die quadrierte Höhe, um dadurch Fehlschätzungen, die durch Rauschen bedingt sind, zu vermeiden. Die Berechnung der ersten Höheninformation erfolgt basierend auf zwei zwischen der jeweiligen Sensorposition und dem Objekt gemessenen Abstandsinformationen und einer zwischen den Sensorpositionen horizontal gemessenen Distanzinformation. Die erste Höheninformation wird beispielsweise in einem ersten Messzyklus ermittelt.

Anschließend erfolgt das Berechnen der Varianz der ersten Höheninformation.

Daraufhin wird zumindest ein weiteres Ultraschallsignal durch den zumindest einen Ultraschallsensor empfangen. Es wird basierend auf dieser weiteren Ultraschallmessung eine zweite Höheninformation berechnet, die ein Maß für die quadrierte Höhe des Objekts ist. Die Berechnung erfolgt wiederum basierend auf zwei zwischen der jeweiligen Sensorposition und dem Objekt gemessenen Abstandsinformationen und einer zwischen den Sensorpositionen horizontal gemessenen Distanzinformation. Zumindest ein Teil dieser für die Berechnung nötigen Informationen stammt aus der weiteren Ultraschallmessung, die beispielsweise einen zweiten Messzyklus bildet. Der zweite Messzyklus kann dabei ein unmittelbar auf den ersten Messzyklus folgender Messzyklus sein oder zwischen dem ersten und zweiten Messzyklus können weitere Messzyklen liegen. Bei nicht unmittelbar aufeinander folgenden ersten und zweiten Messzyklen wird beispielsweise erreicht, dass sich das Fahrzeug zwischen dem ersten und zweiten Messzyklus auf einer längeren Wegstrecke bewegt, was die Genauigkeit der Höhenschätzung erhöht.

Anschließend erfolgt das Berechnen der Varianz der zweiten Höheninformation.

In einem weiteren Schritt wird eine gemittelte Höheninformation durch Kombinieren der ersten und zweiten Höheninformation und eine gemittelte Varianz der Höheninformation durch Kombinieren der Varianz der ersten und zweiten Höheninformation berechnet.

Die Klassifikation eines detektierten Objekts in eine Höhenklasse erfolgt durch Berechnen zumindest eines Wahrscheinlichkeitswerts basierend auf einer Normalverteilungsfunktion, die als Mittelwert die gemittelte Höheninformation und als Varianz die gemittelte Varianz der Höheninformation aufweist.

Der technische Vorteil des erfindungsgemäßen Verfahrens besteht darin, dass eine zuverlässige Ermittlung der Höhe des reflektierenden Objekts durch die Bestimmung einer Höheninformation, die die quadrierte Höhe des Objekts berücksichtigt, erreicht wird. Dadurch wird bei wiederholter Anwendung eine Verteilung von Werten von Höheninformationen erreicht, die besser einer Normalverteilung entspricht als bei direkter Bestimmung der nichtquadrierten Höhe des Objekts.

Gemäß einem Ausführungsbeispiel werden iterativ weitere Höheninformationen (d.h. neben den ersten und zweiten Höheninformationen zusätzliche Höheninformationen), die ein Maß für die quadrierte Höhe des Objekts sind, und Varianzinformationen zu diesen weiteren Höheninformationen berechnet. Die gemittelte Höheninformation wird durch Kombinieren der Höheninformationen, vorzugsweise aller iterativ bestimmter Höheninformationen, und eine gemittelte Varianz der Höheninformationen wird durch Kombinieren der Varianzen der Höheninformationen, vorzugsweise aller iterativ ermittelter Varianzen, bestimmt. Durch die iterative Bestimmung einer Vielzahl von Höheninformationen und deren Varianzen und Kombinieren dieser Höheninformationen kann eine zuverlässige Klassifikation der Höhe des Objekts erreicht werden.

Gemäß einem Ausführungsbeispiel wird die erste, zweite und/oder weitere Höheninformation durch folgende Formel berechnet:

$$H = h^2 = r_1^2 - \frac{(r_1^2 - r_2^2 + s^2)^2}{4s^2};$$

wobei gilt:

h:    Höhendifferenz zwischen dem zumindest einen Ultraschallsensor und dem Objekt;
$r_1$:    Abstand zwischen einer ersten Senderposition und dem Objekt in Sende- und Empfangsrichtung;
$r_2$:    Abstand zwischen einer zweiten Senderposition und dem Objekt in Sende- und Empfangsrichtung;
s:    in horizontaler Richtung gemessene Distanzinformation als Abstand zwischen erster und zweiter Sensorposition.

Die vorgenannte Formel enthält, im Gegensatz zur direkten Bestimmung der Höhendifferenz h keinen Wurzelterm, was dazu führt, dass negative Werte von H bzw. der quadrierten Höhe h, die durch Rauschen entstehen können, nicht zu ungültigen Ergebnissen führen.

Gemäß einem Ausführungsbeispiel wird die Varianz der ersten, zweiten und/oder weiteren Höheninformation basierend auf einer Variationsanalyse erster Ordnung ermittelt. Vorzugsweise wird durch die Variationsanalyse die Varianz der Höheninformation durch Addieren von mehreren Summanden berechnet, wobei die Summanden jeweils die Änderung der Höheninformation in Abhängigkeit von der Änderung einer Eingangsgröße, die zur Berechnung der Höheninformation herangezogen wird, berücksichtigt.

Gemäß einem Ausführungsbeispiel erfolgt die Berechnung der Varianz der ersten, zweiten und/oder weiteren Höheninformation durch folgende Gleichung:

$$Var[H] = \left(\frac{dH}{dr_1}\right)^2 \cdot Var[r_1] + \left(\frac{dH}{dr_2}\right)^2 \cdot Var[r_2] + \left(\frac{dH}{ds}\right)^2 \cdot Var[s];$$

wobei gilt:

$r_1$:    Abstand zwischen einer ersten Senderposition und dem Objekt in Sende- und Empfangsrichtung;
$r_2$:    Abstand zwischen einer zweiten Senderposition und dem Objekt in Sende- und Empfangsrichtung;
s:    in horizontaler Richtung gemessene Distanzinformation als Abstand zwischen erster und zweiter Sensorposition;

$$\frac{dH}{dr_1}:$$

erste Ableitung der Höheninformation H nach $r_1$;

$$\frac{dH}{dr_2}:$$

erste Ableitung der Höheninformation H nach $r_2$;

$$\frac{dH}{ds};$$

erste Ableitung der Höheninformation H nach s;

$Var[r_1]$:   Varianz des Abstands zwischen einer ersten Senderposition und dem Objekt in Sende- und Empfangs-richtung;

$Var[r_2]$:   Varianz des Abstands zwischen einer zweiten Senderposition und dem Objekt in Sende- und Empfangsrichtung;

$Var[s]$:   Varianz der in horizontaler Richtung gemessenen Distanzinformation als Abstand zwischen erster und zweiter Sensorposition.

Gemäß einem Ausführungsbeispiel erfolgt das Berechnen der gemittelten Höheninformation basierend auf folgender Formel:

$$\overline{H} = \frac{Var[H''] \cdot H' + Var[H'] \cdot H''}{Var[H'] + Var[H'']};$$

wobei gilt:

H':   geschätzte Höheninformationen aus einem ersten Messzyklus;

H":   geschätzte Höheninformationen aus einem zweiten Messzyklus;

Var[H']:   Varianz der Höheninformation im ersten Messzyklus;

Var[H"]:   Varianz der Höheninformation im zweiten Messzyklus.

Als geschätzte Höheninformation aus den jeweiligen Messzyklen können dabei entweder Höheninformationen verwendet werden, die aus Einzelmessungen stammen oder die geschätzte Höheninformation können bereits gemittelte Höheninformationen sein, d.h. selbst aus einer Mittelung über mehrere Messungen hervorgegangen sein. Gleiches gilt in analoger Weise für die Varianz der Höheninformation im ersten und/oder zweiten Messzyklus.

Gemäß einem Ausführungsbeispiel erfolgt das Berechnen der gemittelten Varianz der Höheninformation basierend auf folgender Formel:

$$\overline{Var[H]} = \frac{1}{\dfrac{1}{Var[H']} + \dfrac{1}{Var[H'']}};$$

wobei gilt:

Var[H']:   Varianz der Höheninformation im ersten Messzyklus;

Var[H"]:   Varianz der Höheninformation im zweiten Messzyklus.

Gemäß einem anderen Ausführungsbeispiel erfolgt das Berechnen der gemittelten Höheninformation und der gemittelten Varianz der Höheninformation basierend auf einem Verfahren von gemittelten kleinsten Fehlerquadraten (engl.: least squares-Verfahren). Dabei können Gewichtungsfaktoren (engl.: weighted least squares-Verfahren) verwendet werden, die derart gewählt sind, dass diese eine zwischen den Messungen bestehende Korrelation berücksichtigen.

Gemäß einem Ausführungsbeispiel erfolgt das Berechnen des Wahrscheinlichkeitswerts zur Zuweisung des Objekts in eine Höhenklasse basierend auf folgender Formel:

$$p = \int_a^b N\big(x, \overline{H}, \overline{Var[H]}\big)dx;$$

wobei gilt:

$N(x, \overline{H}, \overline{Var[H]})$: Normalverteilung;

a: unterer Grenzwert zur Zuordnung in die jeweilige Höhenklasse;

b: oberer Grenzwert zur Zuordnung in die jeweilige Höhenklasse;

$\overline{H}$: gemittelte Höheninformation;

$\overline{Var[H]}$ gemittelte Varianz.

Damit kann die Wahrscheinlichkeit, dass sich ein Objekt in einem durch den unteren bzw. oberen Grenzwert festgelegten Höhenbereich befindet, dadurch bestimmt werden, dass eine Normalverteilung der Höheninformation um die gemittelte Höheninformation als Mittelwert und mit einer Varianz gleich der gemittelten Varianz angenommen wird.

Gemäß einem Ausführungsbeispiel erfolgt die Berechnung der Höhenklasse basierend auf einer Korrekturfunktion, die die Abweichung der statistischen Verteilung der Höheninformation von der Normalfunktion berücksichtigt. Dadurch kann der Fehler, der sich durch die Abweichung der statistischen Verteilung der Höheninformation von der Normalfunktion ergibt, minimiert werden.

Gemäß einem Ausführungsbeispiel wird die Korrekturfunktion basierend auf einer Datenreihe von Höheninformationen, die basierend auf unterschiedlichen Abstandsinformationen zwischen der jeweiligen Sensorposition und dem Objekt und unterschiedlichen horizontal gemessenen Distanzinformationen ermittelt wurden, geschätzt. In anderen Worten wird damit analysiert, welchen Einfluss die Abstandsinformationen bzw. die Distanzinformationen auf die statistische Verteilung der Höheninformationen haben und abhängig davon wird die Korrekturfunktion gewählt.

Gemäß einem Ausführungsbeispiel wird ein für die Berechnung des Wahrscheinlichkeitswerts verwendeter unterer und/oder oberer Grenzwert basierend auf der Korrekturfunktion angepasst. Dadurch kann durch die Adaption des unteren und/oder oberen Grenzwerts die Abweichung der statistischen Verteilung der Höheninformation von der Normalfunktion bei der Bestimmung der Höhe des Objekts kompensiert werden.

Gemäß einem Ausführungsbeispiel wird die Distanzinformation basierend auf Odometriedaten des Fahrzeugs ermittelt. In anderen Worten kann ein Odometriesystem des Fahrzeugs Informationen bereitstellen, die angeben, wie sich das Fahrzeug zwischen zwei Messzyklen des zumindest einen Ultraschallsensors bewegt hat. Da diese Bewegung des Fahrzeugs nicht zwangsläufig in Sende- bzw. Empfangsrichtung des Ultraschallsensors erfolgen muss, muss die Distanzinformation, d.h. der Abstand der Sensorpositionen in Sende- bzw. Empfangsrichtung des Ultraschallsensors aus den Odometriedaten des Fahrzeugs berechnet werden.

Gemäß einem Ausführungsbeispiel wird das Objekt als Linienobjekt mit einer Längsausrichtung angenommen und die Sende- und Empfangsrichtung des zumindest einen Ultraschallsensors und die Richtung, in der die Distanzinformation gemessen wird, wird als senkrecht zu dieser Längsausrichtung des Linienobjekts angenommen.

Gemäß einem alternativen Ausführungsbeispiel wird das Objekt mittels Informationen, die durch die Ultraschallsensorik in mehreren Erfassungszyklen ermittelt wurden, durch eine Objektkonturlinie nachgebildet und die Distanzinformationen werden als Differenz zwischen dem horizontal gemessenen Abstand der Sensorpositionen zu dieser Linie angenommen.

Gemäß einem weiteren Aspekt betrifft die Erfindung ein System zur Höhenschätzung eines Objekts umfassend eine an einem Fahrzeug vorgesehene Ultraschallsensorik und eine Rechnereinheit, wobei das System dazu ausgebildet ist, folgende Schritte zu vollziehen:

a) Empfangen von zumindest zwei Ultraschallsignalen durch zumindest einen Ultraschallsensor der Ultraschallsensorik, wobei ein einziger Ultraschallsensor aufgrund einer Fahrzeugbewegung unterschiedliche Sensorpositionen relativ zum Objekt aufweist oder wobei mehrere Ultraschallsensoren aufgrund der Fahrzeugbewegung und/oder einer unterschiedlichen Anordnung am Fahrzeug unterschiedliche Sensorpositionen relativ zum Objekt aufweisen;

b) Berechnen einer ersten Höheninformation, die ein Maß für die quadrierte Höhe des Objekts ist, basierend auf zwei zwischen der jeweiligen Sensorposition und dem Objekt gemessenen Abstandsinformationen und einer zwischen den Sensorpositionen horizontal gemessenen Distanzinformation durch die Rechnereinheit;

c) Berechnen der Varianz der ersten Höheninformation durch die Rechnereinheit;

d) Empfangen zumindest eines weiteren Ultraschallsignals durch den zumindest einen Ultraschallsensor und Berechnen einer zweiten Höheninformation, die ein Maß für die quadrierte Höhe des Objekts ist, basierend auf zwei zwischen der jeweiligen Sensorposition und dem Objekt gemessenen Abstandsinformationen und einer zwischen den Sensorpositionen horizontal gemessenen Distanzinformation;

e) Berechnen der Varianz der zweiten Höheninformation;

f) Berechnen einer gemittelten Höheninformation durch Kombinieren der ersten und zweiten Höheninformation und einer gemittelten Varianz der Höheninformation durch Kombinieren der Varianz der ersten und zweiten Höheninformation;

g) Klassifikation eines detektierten Objekts in eine Höhenklasse durch Berechnen zumindest eines Wahrscheinlichkeitswerts durch die Rechnereinheit basierend auf einer Normalverteilungsfunktion, die als Mittelwert die gemittelte Höheninformation und als Varianz die gemittelte Varianz der Höheninformation aufweist.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:

Fig. 1 beispielhaft und schematisch ein Fahrzeug mit einer Ultraschallsensorik umfassend mehrere umfangsseitig um das Fahrzeug herum verteilte Ultraschallsensoren und eine Rechnereinheit zur Auswertung der von der Ultraschallsensorik bereitgestellten Informationen.

Fig. 2 beispielhaft und schematisch die Erfassung eines Umgebungsobjekts durch einen Ultraschallsensor von zwei unterschiedlichen Sensorpositionen aus;

Fig. 3 beispielhaft und schematisch ein Histogramm, das die statistische Verteilung der Höheninformation H zeigt; und

Fig. 4 beispielhaft ein Ablaufdiagramm, das die Schritte eines Verfahrens zur Höhenbestimmung eines Objekts verdeutlicht.

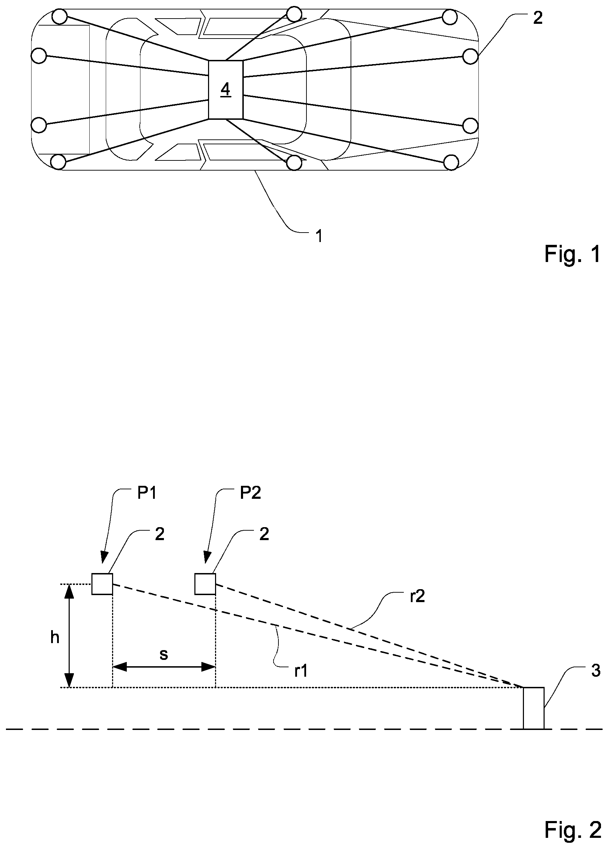

Figur 1 zeigt beispielhaft und grob schematisch ein Fahrzeug 1. Das Fahrzeug 1 weist eine Vielzahl von Ultraschallsensoren 2 auf, mittels denen eine Umgebungserfassung bewirkt wird.

Die Ultraschallsensoren 2 sind mit zumindest einer Recheneinheit 4 gekoppelt, mittels der das nachfolgend beschriebene Verfahren zur Höhenschätzung eines Objekts 3 im Umfeld eines Fahrzeugs 1, erfolgt.

Figur 2 zeigt beispielhaft eine Erfassungssituation, bei der mittels eines Ultraschallsensors 2 eines Fahrzeugs 1 ein Objekt 3 erfasst wird, das niedriger ist als die Einbauhöhe des Ultraschallsensors 2 am Fahrzeug 1.

Die Höhenbestimmung des Objekts 3 kann dadurch erfolgen, dass entweder durch einen einzigen Ultraschallsensor 2 mehrere Messungen durchgeführt werden, wobei beispielsweise an einer ersten Sensorposition P1 eine erste Messung und an einer zweiten Sensorposition P2 eine zweite Messung vollzogen wird und die Sensorpositionen P1 und P2 aufgrund der Bewegung des Fahrzeugs 1 unterschiedlich sind. Alternativ kann die Höhenbestimmung des Objekts 3 auch durch zumindest zwei Messungen unterschiedlicher Ultraschallsensoren 2 des Fahrzeugs erfolgen, die an unterschiedlichen Positionen am Fahrzeug 1 angeordnet sind und damit einen unterschiedlichen Abstand zum Objekt 3 aufweisen.

Wie in Fig. 2 gezeigt, wird durch den Ultraschallsensor 2, der sich an der ersten Sensorposition P1 befindet, eine erste Abstandsinformation r1 ermittelt. Diese erste Abstandsinformation r1 entspricht dem in direkter Sichtlinie gemessenen Abstand zwischen dem an der Position P1 befindlichen Ultraschallsensor 2 und dem Objekt 3. In analoger Weise wird durch den Ultraschallsensor 2, der sich an der zweiten Sensorposition P2 befindet, eine zweite Abstandsinformation r2 ermittelt. Diese zweite Abstandsinformation r2 entspricht dem in direkter Sichtlinie gemessenen Abstand zwischen dem an der Position P2 befindlichen Ultraschallsensor 2 und dem Objekt 3.

Der horizontal in Richtung der Verbindungslinie zwischen dem Sensor 2 und dem Objekt 3 gemessene Abstand zwischen der ersten und zweiten Sensorposition p1, p2 wird nachfolgend als Distanzinformation s bezeichnet. Der vertikal gemessene Höhenunterschied zwischen dem Objekt 3 und dem Ultraschallsensor 2 wird nachfolgend als Höhe h bezeichnet.

Aufgrund geometrischer Zusammenhänge kann die Höhe h wie folgt berechnet werden:

$$h = \sqrt{r_1^2 - \frac{(r_1^2 - r_2^2 + s^2)^2}{4s^2}} \quad (Formel\ 1)$$

Dabei ist:

h: Höhendifferenz zwischen dem zumindest einen Ultraschallsensor und dem Objekt;

$r_1$: Abstand zwischen einer ersten Senderposition und dem Objekt in Sende- und Empfangsrichtung;

$r_2$: Abstand zwischen einer zweiten Senderposition und dem Objekt in Sende- und Empfangsrichtung;

s: in horizontaler Richtung gemessene Distanzinformation als Abstand zwischen erster und zweiter Sensorposition.

Problematisch ist, dass es durch Rauschen vorkommen kann, dass der Term unter der Wurzel negativ wird und damit keine Berechnung der Höhe möglich ist.

Nachfolgend wird ein Verfahren zur Höhenklassifikation des Objekts 3 offenbart, das das Problem des negativen Terms unter der Wurzel vermeidet.

Das erfindungsgemäße Verfahren schätzt anstelle der Höhe h eine Höheninformation H, die dem Quadrat der Höhe h entspricht.

$$H = h^2 = r_1^2 - \frac{(r_1^2 - r_2^2 + s^2)^2}{4s^2} \quad (Formel\ 2)$$

Dabei ist wiederum:

h: Höhendifferenz zwischen dem zumindest einen Ultraschallsensor und dem Objekt;
$r_1$: Abstand zwischen einer ersten Senderposition und dem Objekt in Sende- und Empfangsrichtung;
$r_2$: Abstand zwischen einer zweiten Senderposition und dem Objekt in Sende- und Empfangsrichtung;
s: in horizontaler Richtung gemessene Distanzinformation als Abstand zwischen erster und zweiter Sensorposition.

Da einzelne Messungen stark fehlerbehaftet sein können und damit zu falschen Höhenschätzungen führen, werden mehrere Messungen vollzogen und es wird basierend auf einer Mittelung der geschätzten Höheninformationen H und der Schätzung der Varianz der Höheninformationen H eine Höhenschätzung des Objekts 3 bzw. eine Höhenklassifizierung vorgenommen.

Um die Varianz der Höheninformationen H zu bestimmen, wird beispielsweise eine Variationsanalyse erster Ordnung (engl.: first order variational analysis) vorgenommen.

Dies kann beispielsweise basierend auf der folgenden Formel erfolgen:

$$Var[H] = \left(\frac{dH}{dr_1}\right)^2 \cdot Var[r_1] + \left(\frac{dH}{dr_2}\right)^2 \cdot Var[r_2] + \left(\frac{dH}{ds}\right)^2 \cdot Var[s] \quad (Formel\ 3)$$

Dabei ist:
$r_1$: Abstand zwischen einer ersten Senderposition und dem Objekt in Sende- und Empfangsrichtung;
$r_2$: Abstand zwischen einer zweiten Senderposition und dem Objekt in Sende- und Empfangsrichtung;
s: in horizontaler Richtung gemessene Distanzinformation als Abstand zwischen erster und zweiter Sensorposition;

$$\frac{dH}{dr_1}:$$

erste Ableitung der Höheninformation H nach $r_1$;

$$\frac{dH}{dr_2}:$$

erste Ableitung der Höheninformation H nach $r_2$;

$$\frac{dH}{ds}:$$

erste Ableitung der Höheninformation H nach s;
$Var[r_1]$: Varianz des Abstands zwischen einer ersten Senderposition und dem Objekt in Sende- und Empfangs-

richtung;

*Var*[$r_2$]: Varianz des Abstands zwischen einer zweiten Senderposition und dem Objekt in Sende- und Empfangsrichtung;

*Var*[$s$]: Varianz der in horizontaler Richtung gemessenen Distanzinformation als Abstand zwischen erster und zweiter Sensorposition.

Die erste Ableitung der Höheninformation H nach $r_1$ wird wie folgt berechnet:

$$\frac{dH}{dr_1} = 2r_1 - \frac{r_1(r_1^2 - r_2^2 + s^2)}{s^2} \quad (Formel\ 4)$$

Die erste Ableitung der Höheninformation H nach $r_2$ wird wie folgt berechnet:

$$\frac{dH}{dr_2} = \frac{r_2(r_1^2 - r_2^2 + s^2)}{s^2} \quad (Formel\ 5)$$

Die erste Ableitung der Höheninformation H nach s wird wie folgt berechnet:

$$\frac{dH}{ds} = \frac{(r_1^2 - r_2^2 + s^2)^2 - 2\,s^2(r_1^2 - r_2^2 + s^2)}{2\,s^3} \quad (Formel\ 6)$$

Vorteilhafterweise werden mehrere durch die Ultraschallsensorik des Fahrzeugs 1 vollzogene Messungen, die beispielsweise bei einem Objekttracking während der Bewegung des Fahrzeugs vollzogen werden, miteinander kombiniert. Dabei kann die jeweilige Varianz der Höheninformationen H als Gewichtungsfaktor herangezogen werden.

Für den Fall, dass eine erste Höheninformation H' und eine zweite Höheninformation H" ermittelt wird, kann eine gemittelte Höheninformation durch folgende Formel ermittelt werden:

$$\bar{H} = \frac{Var[H''] \cdot H' + Var[H'] \cdot H''}{Var[H'] + Var[H'']} \quad (Formel\ 7)$$

Dabei ist:

H': erste geschätzte Höheninformationen aus einem ersten Messzyklus;
H": zweite geschätzte Höheninformationen aus einem ersten Messzyklus;
Var[H']: Varianz der Höheninformation im ersten Messzyklus;
Var[H"]: Varianz der Höheninformation im zweiten Messzyklus.

Die gemittelte Varianz kann wie folgt berechnet werden:

$$\overline{Var[H]} = \frac{1}{\frac{1}{Var[H']} + \frac{1}{Var[H'']}} \quad (Formel\ 8)$$

wobei gilt:

Var[H']: Varianz der Höheninformation im ersten Messzyklus;
Var[H"]: Varianz der Höheninformation im zweiten Messzyklus.

Es sei angemerkt, dass sich die Höheninformationen H', H" bzw. die Varianzen Var[H'] und Var[H"] jeweils auf einen einzigen Messzyklus (d.h. Bestimmung einer einzelnen Höheninformation H durch die Messung von Abstandsinformationen durch einen Sensor an zwei unterschiedlichen Sensorpositionen) aber auch auf mehrere Messzyklen beziehen können, d.h. die Höheninformationen H', H" und die Varianzen Var[H'] und Var[H"] können selbst schon gemittelte Werte sein.

Alternativ kann das Kombinieren von Messungen der Höheninformationen H auch durch ein Verfahren vollzogen werden, das auf gewichteten kleinsten Fehlerquadraten beruht (engl.: weigthed least squares-Verfahren). Die Gewichtungsfaktoren eines solchen Verfahrens können derart gewählt werden, dass sie eine bestehende Korrelation zwischen den beiden Messungen berücksichtigt.

Nachdem eine Vielzahl von Höheninformationen H ermittelt wurden, kann basierend darauf eine Bestimmung der Höhe h des Objekts 3 erfolgen. Insbesondere kann eine Höhenklassifikation des Objekts 3 in eine Höhenklasse durchgeführt werden.

Beispielsweise kann eine Höhenklassifikation dahingehend erfolgen, dass geprüft wird, wie hoch die Wahrscheinlichkeit ist, dass das Objekt 3 eine Höhe h in einem gewissen Höhenbereich hat.

Für den Fall, dass die Höhenklasse durch einen unteren Grenzwert a und einen oberen Grenzwert b festgelegt ist, kann die Wahrscheinlichkeit, dass die Höhe des Objekts 3 in die Höhenklasse fällt, durch die folgende Formel berechnet werden:

$$p = \int_a^b N\big(x, \overline{H}, \overline{Var[H]}\big)dx \quad (Formel\ 9)$$

Dabei gilt:

$N(x,\overline{H},\overline{Var[H]})$: Normalverteilung von $\overline{H}$ über x mit einer Varianz $\overline{Var[H]}$;
a: unterer Grenzwert zur Zuordnung in die jeweilige Höhenklasse;
b: oberer Grenzwert zur Zuordnung in die jeweilige Höhenklasse;
$\overline{H}$: gemittelte Höheninformation;
$\overline{Var[H]}$: gemittelte Varianz.

Falls die Höhenklasse nach unten bzw. nach oben hin nicht begrenzt ist, d.h. es sich um die niedrigste bzw. die höchste Höhenklasse handelt, kann der untere Grenzwert a den Wert $-\infty$ bzw. der obere Grenzwert b den Wert $+\infty$ annehmen.

Es versteht sich, dass die Grenzwerte a, b der Formel 9 aufgrund der Beziehung $H = h^2$ ebenfalls quadriert werden müssen, d.h. eine Klassifikationsgrenze von 0,3m muss in einen Grenzwert von $0,09m^2$ überführt werden.

Formel 9 geht davon aus, dass die gemittelte Höheninformation eine Gleichverteilung über x aufweist. In Realität weist die gemittelte Höheninformation jedoch häufig eine Abweichung von der Normalverteilung auf.

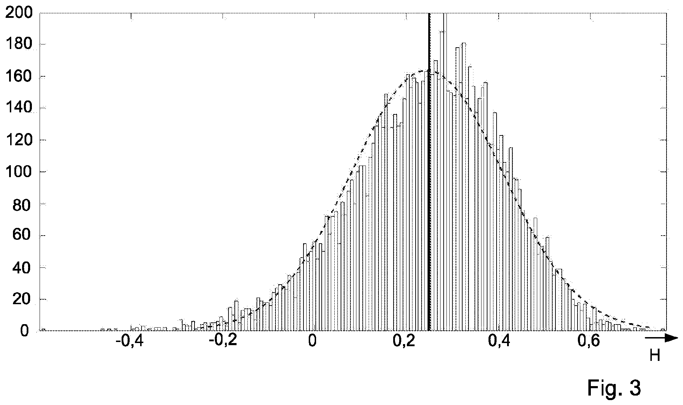

Fig. 3 zeigt eine tatsächliche Verteilung der Höheninformation H basierend auf einem Histogramm, wobei die tatsächliche Höhe h des Objekts relativ zum Sensor 0,1m betragen hat. Wie erkennbar ist, ist die Verteilung nicht achsensymmetrisch zu einer vertikalen Achse, so dass keine Normalverteilung der Höheninformation H vorliegt.

Um diese Abweichung zu kompensieren, kann der zumindest eine Grenzwert a, b mittels einer Korrekturfunktion angepasst werden. Insbesondere kann eine Korrekturfunktion gewählt werden, die eine Anpassung des zumindest einen Grenzwerts abhängig von den Abstandsinformationen $r_1$, $r_2$ und der Distanzinformation s vornimmt. Eine solche Korrekturfunktion kann beispielsweise durch eine Simulation oder durch reale Daten, basierend auf denen die Abhängigkeit der Höheninformation H von den Abstandsinformationen $r_1$, $r_2$ und der Distanzinformation s bestimmt wird, ermittelt werden.

Wie zuvor beschrieben, wird die Distanzinformation s, d.h. die Änderung der Sensorpositionen P1, P2 entlang der Sende- und Empfangsrichtung des Ultraschallsignals benötigt.

Die Fahrzeugbewegung selbst kann durch Informationen einer Odometrieeinheit des Fahrzeugs bestimmt werden. Die Bewegungsrichtung des Fahrzeugs muss aber nicht mit der Sende- und Empfangsrichtung des Ultraschallsignals zwischen dem Ultraschallsensor und dem Objekt zusammenfallen.

Die Distanzinformation s kann beispielsweise wie folgt abgeschätzt werden:
Das Objekt 3 kann beispielsweise als Linienobjekt angenommen werden. Das Linienobjekt wird dabei derart zu der Sende- und Empfangsrichtung des Ultraschallsensors 2 ausgerichtet angenommen, dass die Sende- und Empfangsrichtung des Ultraschallsensors 2 senkrecht zur Längsachse des Linienobjekts verläuft. Damit wird ebenfalls angenommen, dass die Distanzinformation s senkrecht zur Längsachse des Linienobjekts zu messen ist. Wenn die Bewegungsrichtung des Fahrzeugs 1 und dessen absolute Bewegung bekannt ist, kann daraus die Distanzinformation s berechnet werden.

Alternativ kann durch Mehrfachmessungen und Tracking die Objektkontur als gekrümmte bzw. beliebig geformte Linie bzw. als Polygon bzw. Polygonabschnitt bestimmt werden. In diesem Fall kann die Distanzinformation s direkt berechnet werden, und zwar als Differenz zwischen der jeweiligen Sensorposition P1, P2 zu der die Objektkontur wiedergebenden Linie.

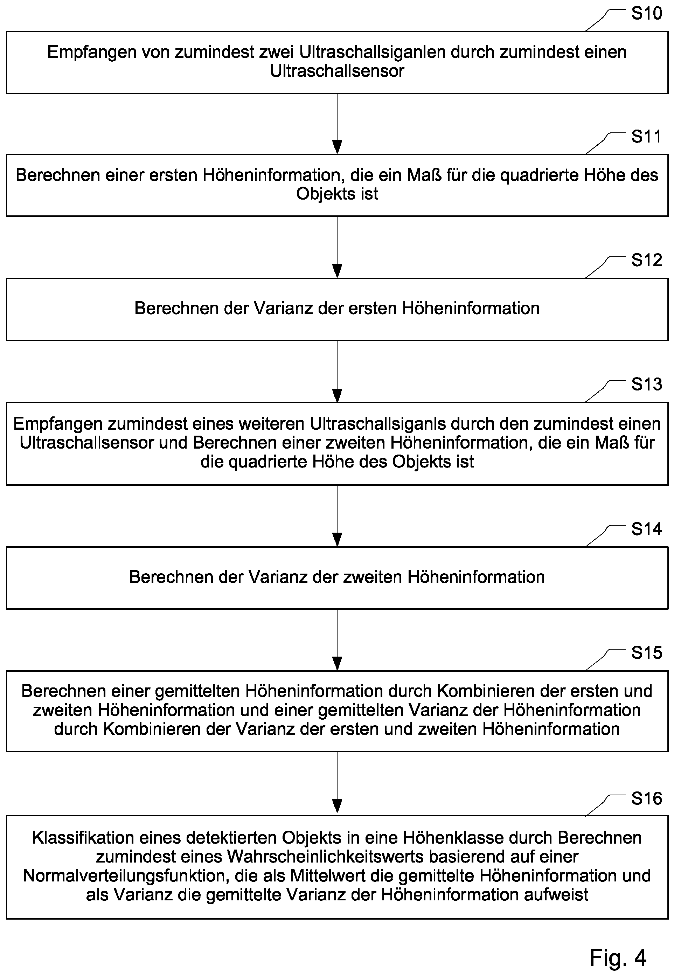

Fig. 4 zeigt in schematischer Darstellung die Schritte eines erfindungsgemäßen Verfahrens zur Höhenschätzung eines Objekts mittels einer Ultraschallsensorik eines Fahrzeugs.

Zunächst werden zumindest zwei Ultraschallsignale durch zumindest einen Ultraschallsensor 2 empfangen.

Dabei kann ein einziger Ultraschallsensor aufgrund einer Fahrzeugbewegung unterschiedliche Sensorpositionen relativ zum Objekt aufweisen. Alternativ können mehrere Ultraschallsensoren 2 aufgrund der Fahrzeugbewegung und/oder einer unterschiedlichen Anordnung am Fahrzeug 1 unterschiedliche Sensorpositionen relativ zum Objekt 3 aufweisen (S10).

Anschließend wird eine erste Höheninformation H berechnet, die ein Maß für die quadrierte Höhe h des Objekts ist. Die Berechnung erfolgt basierend auf zwei zwischen der jeweiligen Sensorposition und dem Objekt 3 gemessenen Abstandsinformationen r1, r2 und einer zwischen den Sensorpositionen horizontal gemessenen Distanzinformation s (S11).

Daraufhin wird die Varianz der ersten Höheninformation berechnet (S12).

Anschließend erfolgt ein Empfangen zumindest eines weiteren Ultraschallsignals durch den zumindest einen Ultraschallsensor und ein Berechnen einer zweiten Höheninformation, die ein Maß für die quadrierte Höhe des Objekts ist, basierend auf zwei zwischen der jeweiligen Sensorposition und dem Objekt gemessenen Abstandsinformationen und einer zwischen den Sensorpositionen horizontal gemessenen Distanzinformation (S13).

Daraufhin wird die Varianz der zweiten Höheninformation berechnet (S14).

Anschließend wird eine gemittelte Höheninformation durch Kombinieren der ersten und zweiten Höheninformation und eine gemittelte Varianz der Höheninformation durch Kombinieren der Varianz der ersten und zweiten Höheninformation berechnet (S15).

Zuletzt erfolgt die Klassifikation eines detektierten Objekts in eine Höhenklasse durch Berechnen zumindest eines Wahrscheinlichkeitswerts basierend auf einer Normalverteilungsfunktion, die als Mittelwert die gemittelte Höheninformation und als Varianz die gemittelte Varianz der Höheninformation aufweist (S16).

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

**Bezugszeichenliste**

1　Fahrzeug
2　Ultraschallsensor
3　Objekt

h　Höhe
H　Höheninformation
p　Wahrscheinlichkeitswert
P1　erste Sensorposition
P2　zweite Sensorposition
r1　erste Abstandsinformation
r2　zweite Abstandsinformation
s　Distanzinformation

**Patentansprüche**

1.　Verfahren zur Höhenschätzung eines Objekts (3) mittels einer Ultraschallsensorik eines Fahrzeugs (1), umfassend folgende Schritte:

a) Empfangen von zumindest zwei Ultraschallsignalen durch zumindest einen Ultraschallsensor (2), wobei ein einziger Ultraschallsensor (2) aufgrund einer Fahrzeugbewegung unterschiedliche Sensorpositionen relativ zum Objekt (3) aufweist oder wobei mehrere Ultraschallsensoren (2) aufgrund der Fahrzeugbewegung und/oder einer unterschiedlichen Anordnung am Fahrzeug (1) unterschiedliche Sensorpositionen (P1, P2) relativ zum Objekt (3) aufweisen (S10);
b) Berechnen einer ersten Höheninformation (H), die ein Maß für die quadrierte Höhe (h) des Objekts ist, basierend auf zwei zwischen der jeweiligen Sensorposition (P1, P2) und dem Objekt (3) anhand der zumindest zwei Ultraschallsignale gemessenen Abstandsinformationen (r1, r2) und einer zwischen den Sensorpositionen horizontal gemessenen Distanzinformation (s) (S11);
c) Berechnen der Varianz der ersten Höheninformation (S12);
d) Empfangen zumindest eines weiteren Ultraschallsignals durch den zumindest einen Ultraschallsensor (2) und Berechnen einer zweiten Höheninformation, die ein Maß für die quadrierte Höhe (h) des Objekts ist, basierend auf zwei zwischen der jeweiligen Sensorposition (P2, P3) und dem Objekt (3) zumindest teilweise anhand des zumindest einen weiteren Ultraschallsignals gemessenen Abstandsinformationen (r2, r3) und einer zwischen den Sensorpositionen horizontal gemessenen Distanzinformation (s) (S13);

e) Berechnen der Varianz der zweiten Höheninformation (S14);

f) Berechnen einer gemittelten Höheninformation durch Kombinieren der ersten und zweiten Höheninformation und einer gemittelten Varianz der Höheninformation durch Kombinieren der Varianz der ersten und zweiten Höheninformation (S15);

g) Klassifikation eines detektierten Objekts (3) in eine Höhenklasse durch Berechnen zumindest eines Wahrscheinlichkeitswerts (p) basierend auf einer Normalverteilungsfunktion, die als Mittelwert die gemittelte Höheninformation und als Varianz die gemittelte Varianz der Höheninformation aufweist (S16).

2. Verfahren nach Anspruch 1, **dadurch gekennzeichnet, dass** iterativ weitere Höheninformationen (H), die ein Maß für die quadrierte Höhe (h) des Objekts sind, und Varianzinformationen zu diesen weiteren Höheninformationen berechnet werden und dass die gemittelte Höheninformation durch Kombinieren der Höheninformationen und eine gemittelte Varianz der Höheninformationen durch Kombinieren der Varianzen der Höheninformationen bestimmt werden.

3. Verfahren nach Anspruch 1 oder 2, **dadurch gekennzeichnet, dass** die erste, zweite und/oder weitere Höheninformation (H) durch folgende Formel berechnet wird:

$$H = h^2 = r_1^2 - \frac{(r_1^2 - r_2^2 + s^2)^2}{4s^2};$$

wobei gilt:

h: Höhendifferenz zwischen dem zumindest einen Ultraschallsensor und dem Objekt;

$r_1$: Abstand zwischen einer ersten Senderposition und dem Objekt in Sende- und Empfangsrichtung;

$r_2$: Abstand zwischen einer zweiten Senderposition und dem Objekt in Sende- und Empfangsrichtung;

s: in horizontaler Richtung gemessene Distanzinformation als Abstand zwischen erster und zweiter Sensorposition.

4. Verfahren nach Anspruch 1 oder 2, **dadurch gekennzeichnet, dass** die Varianz der ersten, zweiten und/oder weiteren Höheninformation basierend auf einer Variationsanalyse erster Ordnung ermittelt wird.

5. Verfahren nach einem der vorhergehenden Ansprüche, **dadurch gekennzeichnet, dass** das Berechnen der Varianz der ersten, zweiten und/oder weiteren Höheninformation (H) durch folgende Gleichung erfolgt:

$$Var[H] = \left(\frac{dH}{dr_1}\right)^2 \cdot Var[r_1] + \left(\frac{dH}{dr_2}\right)^2 \cdot Var[r_2] + \left(\frac{dH}{ds}\right)^2 \cdot Var[s];$$

wobei gilt:

$r_1$: Abstand zwischen einer ersten Senderposition und dem Objekt in Sende- und Empfangsrichtung;

$r_2$: Abstand zwischen einer zweiten Senderposition und dem Objekt in Sende- und Empfangsrichtung;

s: in horizontaler Richtung gemessene Distanzinformation als Abstand zwischen erster und zweiter Sensorposition;

$$\frac{dH}{dr_1}:$$

erste Ableitung der Höheninformation H nach $r_1$;

$$\frac{dH}{dr_2}:$$

erste Ableitung der Höheninformation H nach $r_2$;

$$\frac{dH}{ds};$$

erste Ableitung der Höheninformation H nach s;
*Var*[$r_1$]: Varianz des Abstands zwischen einer ersten Senderposition und dem Objekt in Sende- und Empfangsrichtung;
*Var*[$r_2$]: Varianz des Abstands zwischen einer zweiten Senderposition und dem Objekt in Sende- und Empfangsrichtung;
*Var*[*s*]: Varianz der in horizontaler Richtung gemessenen Distanzinformation als Abstand zwischen erster und zweiter Sensorposition.

6.  Verfahren nach einem der vorhergehenden Ansprüche, **dadurch gekennzeichnet, dass** das Berechnen der gemittelten Höheninformation basierend auf folgender Formel erfolgt:

$$\overline{H} = \frac{Var[H''] \cdot H' + Var[H'] \cdot H''}{Var[H'] + Var[H'']};$$

wobei gilt:

H': geschätzte Höheninformationen aus einem ersten Messzyklus;
H": geschätzte Höheninformationen aus einem zweiten Messzyklus;
Var[H']: Varianz der Höheninformation im ersten Messzyklus;
Var[H"]: Varianz der Höheninformation im zweiten Messzyklus.

7.  Verfahren nach einem der vorhergehenden Ansprüche, **dadurch gekennzeichnet, dass** das Berechnen der gemittelten Varianz der Höheninformation basierend auf folgender Formel erfolgt:

$$\overline{Var[H]} = \frac{1}{\frac{1}{Var[H']} + \frac{1}{Var[H'']}};$$

wobei gilt:

Var[H']: Varianz der Höheninformation im ersten Messzyklus;
Var[H"]: Varianz der Höheninformation im zweiten Messzyklus.

8.  Verfahren nach einem der Ansprüche 1 bis 5, **dadurch gekennzeichnet, dass** das Berechnen der gemittelten Höheninformation und der gemittelten Varianz der Höheninformation basierend auf einem Verfahren von gemittelten kleinsten Fehlerquadraten erfolgt.

9.  Verfahren nach einem der vorhergehenden Ansprüche, **dadurch gekennzeichnet, dass** das Berechnen des Wahrscheinlichkeitswerts (p) zur Zuweisung des Objekts in eine Höhenklasse basierend auf folgender Formel erfolgt:

$$p = \int_a^b N\big(x, \overline{H}, \overline{Var[H]}\big)dx;$$

wobei gilt:

$$N\big(x, \overline{H}, \overline{Var[H]}\big);$$

Normalverteilung;

a: unterer Grenzwert zur Zuordnung in die jeweilige Höhenklasse;
b: oberer Grenzwert zur Zuordnung in die jeweilige Höhenklasse;

$$\overline{H}:$$

gemittelte Höheninformation;

$$\overline{Var[H]}:$$

gemittelte Varianz.

10. Verfahren nach einem der vorhergehenden Ansprüche, **dadurch gekennzeichnet, dass** die Berechnung der Höhenklasse basierend auf einer Korrekturfunktion erfolgt, die die Abweichung der statistischen Verteilung der Höheninformation (H) von der Normalfunktion berücksichtigt.

11. Verfahren nach Anspruch 10, **dadurch gekennzeichnet, dass** die Korrekturfunktion basierend auf einer Datenreihe von Höheninformationen (H), die basierend auf unterschiedlichen Abstandsinformationen zwischen der jeweiligen Sensorposition (P1, P2) und dem Objekt (3) und unterschiedlichen horizontal gemessenen Distanzinformationen (s) ermittelt wurden, geschätzt wird.

12. Verfahren nach Anspruch 10 oder 11, **dadurch gekennzeichnet, dass** ein für die Berechnung des Wahrscheinlichkeitswerts (p) verwendeter unterer und/oder oberer Grenzwert basierend auf der Korrekturfunktion angepasst wird.

13. Verfahren nach einem der vorhergehenden Ansprüche, **dadurch gekennzeichnet, dass** das Objekt (3) als Linienobjekt mit einer Längsausrichtung angenommen wird und die Sende- und Empfangsrichtung des zumindest einen Ultraschallsensors (2) und die Richtung, in der die Distanzinformation (s) gemessen wird, als senkrecht zu dieser Längsausrichtung des Linienobjekts angenommen wird.

14. Verfahren nach einem der Ansprüche 1 bis 12, **dadurch gekennzeichnet, dass** das Objekt (3) mittels Informationen, die durch die Ultraschallsensorik in mehreren Erfassungszyklen ermittelt wurden, durch eine Objektkonturlinie nachgebildet wird und die Distanzinformationen (s) als Differenz zwischen dem horizontal gemessenen Abstand der Sensorpositionen (P1, P2) zu der Linie angenommen werden.

15. System zur Höhenschätzung eines Objekts (3) umfassend eine an einem Fahrzeug (1) vorgesehene Ultraschallsensorik und eine Rechnereinheit (4), wobei das System dazu ausgebildet ist, folgende Schritte zu vollziehen:

a) Empfangen von zumindest zwei Ultraschallsignalen durch zumindest einen Ultraschallsensor (2) der Ultraschallsensorik, wobei ein einziger Ultraschallsensor (2) aufgrund einer Fahrzeugbewegung unterschiedliche Sensorpositionen (P1, P2) relativ zum Objekt (3) aufweist oder wobei mehrere Ultraschallsensoren (2) aufgrund der Fahrzeugbewegung und/oder einer unterschiedlichen Anordnung am Fahrzeug (1) unterschiedliche Sensorpositionen (P1, P2) relativ zum Objekt (3) aufweisen;
b) Berechnen einer ersten Höheninformation (H), die ein Maß für die quadrierte Höhe (h) des Objekts ist, basierend auf zwei zwischen der jeweiligen Sensorposition (P1, P2) und dem Objekt (3) anhand der zumindest zwei Ultraschallsignale gemessenen Abstandsinformationen und einer zwischen den Sensorpositionen (P1, P2) horizontal gemessenen Distanzinformation (s) durch die Rechnereinheit (4);
c) Berechnen der Varianz der ersten Höheninformation (H) durch die Rechnereinheit (4);
d) Empfangen zumindest eines weiteren Ultraschallsignals durch den zumindest einen Ultraschallsensor (2) und Berechnen einer zweiten Höheninformation, die ein Maß für die quadrierte Höhe (h) des Objekts ist, basierend auf zwei zwischen der jeweiligen Sensorposition (P2, P3) und dem Objekt (3) zumindest teilweise anhand des zumindest einen weiteren Ultraschallsignals gemessenen Abstandsinformationen (r2, r3) und einer zwischen den Sensorpositionen horizontal gemessenen Distanzinformation (s);
e) Berechnen der Varianz der zweiten Höheninformation
f) Berechnen einer gemittelten Höheninformation durch Kombinieren der ersten und zweiten Höheninformation und einer gemittelten Varianz der Höheninformation durch Kombinieren der Varianz der ersten und zweiten Höheninformation;
g) Klassifikation eines detektierten Objekts (3) in eine Höhenklasse durch Berechnen zumindest eines Wahrscheinlichkeitswerts (p) durch die Rechnereinheit (4) basierend auf einer Normalverteilungsfunktion, die als Mittelwert die gemittelte Höheninformation und als Varianz die gemittelte Varianz der Höheninformation aufweist.

**Claims**

1. A method for the estimation of the height of an object (3) by means of an ultrasonic sensor system of a vehicle (1), comprising the following steps:

   a) receiving at least two ultrasonic signals by way of at least one ultrasonic sensor (2), wherein a single ultrasonic sensor (2) has different sensor positions relative to the object (3) due to a vehicle movement, or wherein multiple ultrasonic sensors (2) have different sensor positions (P1, P2) relative to the object (3) due to the vehicle movement and/or a different arrangement on the vehicle (1) (S10);
   b) calculating a first item of height information (H), which is a measure of the squared height (h) of the object, based on two items of distance information (r1, r2) measured between the respective sensor position (P1, P2) and the object (3) based on the at least two ultrasonic signals and an item of distance information (s) measured horizontally between the sensor positions (S11);
   c) calculating the variance of the first item of height information (S12);
   d) receiving at least one further ultrasonic signal by way of the at least one ultrasonic sensor (2) and calculating a second item of height information, which is a measure of the squared height (h) of the object, based on two items of distance information (r2, r3) measured between the respective sensor position (P2, P3) and the object (3), at least partially based on the at least one further ultrasonic signal, and an item of distance information (s) measured horizontally between the sensor positions (S13);
   e) calculating the variance of the second item of height information (S14);
   f) calculating an averaged item of height information by combining the first and second item of height information and an averaged variance of the item of height information by combining the variance of the first and second item of height information (S15);
   g) classifying a detected object (3) into a height class by calculating at least one probability value (p) based on a normal distribution function, which has the averaged item of height information as a mean value and the averaged variance of the item of height information as a variance (S16).

2. The method as claimed in claim 1, **characterized in that** further height information (H), which is a measure of the squared height (h) of the object, and variance information relating to this further height information are calculated iteratively, and **in that** the averaged item of height information is determined by combining the height information and an averaged variance of the height information is determined by combining the variances of the height information.

3. The method as claimed in claim 1 or 2, **characterized in that** the first, second, and/or further item of height information (H) is calculated by the following formula:

$$H = h^2 = r_1^2 - \frac{(r_1^2 - r_2^2 + s^2)^2}{4s^2};$$

wherein the following applies:

   h: height difference between the at least one ultrasonic sensor and the object;
   $r_1$: distance between a first transmitter position and the object in the transmitting and receiving directions;
   $r_2$: distance between a second transmitter position and the object in the transmitting and receiving directions;
   s: item of distance information measured in the horizontal direction as the distance between the first and second sensor positions.

4. The method as claimed in claim 1 or 2, **characterized in that** the variance of the first, second, and/or further item of height information is ascertained based on a first-order variation analysis.

5. The method as claimed in any one of the preceding claims, **characterized in that** the calculation of the variance of the first, second, and/or further item of height information (H) is carried out by the following equation:

$$Var[H] = \left(\frac{dH}{dr_1}\right)^2 \cdot Var[r_1] + \left(\frac{dH}{dr_2}\right)^2 \cdot Var[r_2] + \left(\frac{dH}{ds}\right)^2 \cdot Var[s];$$

wherein the following applies:

$r_1$: distance between a first transmitter position and the object in the transmitting and receiving directions;
$r_2$: distance between a second transmitter position and the object in the transmitting and receiving directions;
s: item of distance information measured in the horizontal direction as the distance between the first and second sensor positions;

$\frac{dH}{dr_1}$ : first derivative of the item of height information H according to $r_1$;

$\frac{dH}{dr_2}$ : first derivative of the item of height information H according to $r_2$;

$\frac{dH}{ds}$ : first derivative of the item of height information H according to s;

$Var[r_1]$:variance of the distance between a first transmitter position and the object in the transmitting and receiving directions;
$Var[r_2]$:variance of the distance between a second transmitter position and the object in the transmitting and receiving directions;
$Var[s]$: variance of the distance information measured in the horizontal direction as the distance between the first and second sensor positions.

6. The method as claimed in any one of the preceding claims, **characterized in that** the calculating of the averaged item of height information is carried out based on the following formula:

$$\bar{H} = \frac{Var[H''] \cdot H' + Var[H'] \cdot H''}{Var[H'] + Var[H'']};$$

wherein the following applies:

H': estimated item of height information from a first measurement cycle;
H": estimated item of height information from a second measurement cycle;
Var[H']: variance of the item of height information in the first measurement cycle;
Var[H"]: variance of the item of height information in the second measurement cycle.

7. The method as claimed in any one of the preceding claims, **characterized in that** the calculating of the averaged item of height information is carried out based on the following formula:

$$\overline{Var[H]} = \frac{1}{\frac{1}{Var[H']} + \frac{1}{Var[H'']}};$$

wherein the following applies:

Var[H']: variance of the item of height information in the first measurement cycle;
Var[H"]: variance of the item of height information in the second measurement cycle.

8. The method as claimed in any one of claims 1 to 5, **characterized in that** the calculating of the averaged height information and of the averaged variance of the item of height information is carried out based on a method of averaged least square errors.

9. The method as claimed in any one of the preceding claims, **characterized in that** the calculating of the probability value (p) for assignment of the object to a height class is carried out based on the following formula:

$$p = \int_a^b , N\left(x, \bar{H}, \overline{Var[H]}\right) dx;$$

wherein the following applies:

$N(x, \bar{H}, \overline{Var[H]})$: normal distribution;
a: lower limit value for assignment to the respective height class;
b: upper limit value for assignment to the respective height class;
$\bar{H}$: averaged item of height information;
$\overline{Var[H]}$: averaged variance.

10. The method as claimed in any one of the preceding claims, **characterized in that** the calculation of the height class is based on a correction function which takes into consideration the deviation of the statistical distribution of the item of height information (H) from the normal function.

11. The method as claimed in claim 10, **characterized in that** the correction function is estimated based on a data series of height information (H) which has been ascertained based on different distance information between the respective sensor position (P1, P2) and the object (3) and different horizontally measured distance information (s).

12. The method as claimed in claim 10 or 11, **characterized in that** a lower and/or upper limit value used for the calculation of the probability value (p) is adapted based on the correction function.

13. The method as claimed in any one of the preceding claims, **characterized in that** the object (3) is assumed to be a line object having a longitudinal orientation and the transmitting and receiving directions of the at least one ultrasonic sensor (2) and the direction in which the distance information (s) is measured are assumed to be perpendicular to this longitudinal alignment of the line object.

14. The method as claimed in any one of claims 1 to 12, **characterized in that** the object (3) is replicated by an object contour line by means of information that has been ascertained by the ultrasonic sensor system in multiple detection cycles, and the distance information (s) is assumed to be the difference between the horizontally measured distance of the sensor positions (P1, P2) and the line.

15. A system for the estimation of the height of an object (3), comprising an ultrasonic sensor system provided on a vehicle (1) and a computer unit (4), wherein the system is designed to carry out the following steps:

a) receiving at least two ultrasonic signals by way of at least one ultrasonic sensor (2) of the ultrasonic sensor system, wherein a single ultrasonic sensor (2) has different sensor positions (P1, P2) relative to the object (3) due to a vehicle movement, or wherein multiple ultrasonic sensors (2) have different sensor positions (P1, P2) relative to the object (3) due to the vehicle movement and/or a different arrangement on the vehicle (1);
b) calculating a first item of height information (H), which is a measure of the squared height (h) of the object, based on two items of distance information measured between the respective sensor position (P1, P2) and the object (3) based on the at least two ultrasonic signals and an item of distance information (s) measured horizontally between the sensor positions (P1, P2) by the computer unit (4);
c) calculating the variance of the first item of height information (H) by way of the computer unit (4);
d) receiving at least one further ultrasonic signal by way of the at least one ultrasonic sensor (2) and calculating a second item of height information, which is a measure of the squared height (h) of the object, based on two items of distance information (r2, r3) measured between the respective sensor position (P2, P3) and the object (3), at least partially based on the at least one further ultrasonic signal, and an item of distance information (s) measured horizontally between the sensor positions;
e) calculating the variance of the second item of height information;
f) calculating an averaged item of height information by combining the first and second item of height information and an averaged variance of the item of height information by combining the variance of the first and second item of height information;
g) classification of a detected object (3) into a height class by calculating at least one probability value (p) by way of the computer unit (4) based on a normal distribution function, which has the averaged item of height information as a mean value and the averaged variance of the item of height information as a variance.

**Revendications**

1. Procédé d'estimation de la hauteur d'un objet (3) au moyen d'un système de capteurs à ultrasons d'un véhicule (1), comprenant les étapes suivantes :

   a) réception d'au moins deux signaux ultrasonores par au moins un capteur à ultrasons (2), dans lequel un capteur à ultrasons unique (2) présente, en raison d'un déplacement de véhicule, différentes positions de capteur par rapport à l'objet (3) ou dans lequel plusieurs capteurs à ultrasons (2) présentent, en raison du déplacement de véhicule et/ou d'une disposition différente sur le véhicule (1), différentes positions de capteur (P1, P2) par rapport à l'objet (3) (S10) ;
   b) calcul d'une première information de hauteur (H), constituant une mesure de la hauteur au carré (h) de l'objet, sur la base de deux informations de distance (r1, r2) mesurées, au moyen des au moins deux signaux ultrasonores, entre la position de capteur respective (P1, P2) et l'objet (3), ainsi que d'une information de distance (s) mesurée horizontalement entre les positions de capteur (S11) ;
   c) calcul de la variance de la première information de hauteur (S12) ;
   d) réception d'au moins un signal ultrasonore supplémentaire par l'au moins un capteur à ultrasons (2), et calcul d'une deuxième information de hauteur, constituant une mesure de la hauteur au carré (h) de l'objet, sur la base de deux informations de distance (r2, r3) mesurées, au moins partiellement au moyen de l'au moins un signal ultrasonore supplémentaire, entre la position de capteur respective (P2, P3) et l'objet (3), ainsi que d'une information de distance (s) mesurée horizontalement entre les positions de capteur (S13) ;
   e) calcul de la variance de la deuxième information de hauteur (S14) ;
   f) calcul d'une information de hauteur moyenne par combinaison de la première et de la deuxième information de hauteur, et d'une variance moyenne de l'information de hauteur par combinaison de la variance de la première et de la deuxième information de hauteur (S15) ;
   g) classification d'un objet détecté (3) dans une classe de hauteur par le calcul d'au moins une valeur de probabilité (p) sur la base d'une fonction de distribution normale présentant, comme valeur moyenne, l'information de hauteur moyenne et, comme variance, la variance moyenne de l'information de hauteur (S16).

2. Procédé selon la revendication 1, **caractérisé en ce que** des informations de hauteur supplémentaires (H), constituant une mesure de la hauteur au carré (h) de l'objet, ainsi que des informations de variance correspondant à ces informations de hauteur supplémentaires, sont calculées de manière itérative, et **en ce que** l'information de hauteur moyenne est déterminée par combinaison des informations de hauteur et une variance moyenne des informations de hauteur est déterminée par combinaison des variances des informations de hauteur.

3. Procédé selon la revendication 1 ou 2, **caractérisé en ce que** la première, la deuxième et/ou toute information de hauteur supplémentaire (H) est calculée au moyen de la formule suivante :

$$H = h^2 = r_1^2 - \frac{(r_1^2 - r_2^2 + s^2)^2}{4s^2};$$

   dans lequel :

   h : différence de hauteur entre l'au moins un capteur à ultrasons et l'objet ;
   r$_1$ : distance entre une première position de capteur et l'objet dans la direction d'émission et de réception ;
   r$_2$ : distance entre une seconde position de capteur et l'objet dans la direction d'émission et de réception ;
   s : information de distance mesurée dans le sens horizontal comme distance entre la première et la seconde position de capteur.

4. Procédé selon la revendication 1 ou 2, **caractérisé en ce que** la variance de la première, de la deuxième et/ou de toute information de hauteur supplémentaire est déterminée sur la base d'une analyse de variation du premier ordre.

5. Procédé selon l'une quelconque des revendications précédentes, **caractérisé en ce que** le calcul de la variance de la première, de la deuxième et/ou de toute information de hauteur supplémentaire (H) est effectué au moyen de l'équation suivante :

$$Var[H] = \left(\frac{dH}{dr_1}\right)^2 \cdot Var[r_1] + \left(\frac{dH}{dr_2}\right)^2 \cdot Var[r_2] + \left(\frac{dH}{ds}\right)^2 \cdot Var[s];$$

dans lequel :

$r_1$ : distance entre une première position de capteur et l'objet dans la direction d'émission et de réception ;
$r_2$ : distance entre une seconde position de capteur et l'objet dans la direction d'émission et de réception ;
$s$ : information de distance mesurée dans le sens horizontal comme distance entre la première et la seconde position de capteur ;

$\frac{dH}{dr_1}$ : première dérivation de l'information de hauteur H selon $r_1$ ;

$\frac{dH}{dr_2}$ : première dérivation de l'information de hauteur H selon $r_2$ ;

$\frac{dH}{ds}$ : première dérivation de l'information de hauteur H selon s ;

$Var[r_1]$ : variance de la distance entre une première position de capteur et l'objet dans la direction d'émission et de réception ;
$Var[r_2]$ : variance de la distance entre une seconde position de capteur et l'objet dans la direction d'émission et de réception ;
$Var[s]$ : variance de l'information de distance mesurée dans la direction horizontale, correspondant à la distance entre la première et la seconde position de capteur.

6. Procédé selon l'une quelconque des revendications précédentes, **caractérisé en ce que** le calcul de l'information de hauteur moyenne est effectué sur la base de la formule suivante :

$$\bar{H} = \frac{Var[H''] \cdot H' + Var[H'] \cdot H''}{Var[H'] + Var[H'']};$$

dans lequel :

H' : informations de hauteur estimées issues d'un premier cycle de mesure ;
H" : informations de hauteur estimées issues d'un second cycle de mesure ;
Var[H'] : variance de l'information de hauteur lors du premier cycle de mesure ;
Var[H"] : variance de l'information de hauteur lors du second cycle de mesure.

7. Procédé selon l'une quelconque des revendications précédentes, **caractérisé en ce que** le calcul de la variance moyenne de l'information de hauteur est effectué sur la base de la formule suivante :

$$\overline{Var[H]} = \frac{1}{\frac{1}{Var[H']} + \frac{1}{Var[H'']}};$$

dans lequel :

Var[H'] : variance de l'information de hauteur lors du premier cycle de mesure ;
Var[H"] : variance de l'information de hauteur lors du second cycle de mesure.

8. Procédé selon l'une quelconque des revendications 1 à 5, **caractérisé en ce que** le calcul de l'information de hauteur moyenne et de la variance moyenne de l'information de hauteur est effectué sur la base d'un procédé de moindres carrés moyens.

9. Procédé selon l'une quelconque des revendications précédentes, **caractérisé en ce que** le calcul de la valeur de probabilité (p) pour l'attribution de l'objet à une classe de hauteur est effectué sur la base de la formule suivante :

$$p = \int_{a}^{b} - N\left(x, \bar{H}, \overline{Var[H]}\right) dx;$$

dans lequel :

$N(x, \bar{H}, \overline{Var[H]})$: distribution normale ;
a : valeur limite inférieure pour l'attribution à la classe de hauteur correspondante ;
b : valeur limite supérieure pour l'attribution à la classe de hauteur correspondante ;
$\bar{H}$: information de hauteur moyenne ;
$\overline{Var[H]}$: variance moyenne.

10. Procédé selon l'une quelconque des revendications précédentes, **caractérisé en ce que** le calcul de la classe de hauteur est effectué sur la base d'une fonction de correction tenant compte de l'écart entre la distribution statistique de l'information de hauteur (H) et la fonction normale.

11. Procédé selon la revendication 10, **caractérisé en ce que** la fonction de correction est estimée sur la base d'une série de données d'informations de hauteur (H), déterminées à partir de différentes informations de distance entre la position de capteur respective (P1, P2) et l'objet (3) ainsi que de différentes informations de distance mesurées horizontalement (s).

12. Procédé selon la revendication 10 ou 11, **caractérisé en ce qu'**une valeur limite inférieure et/ou supérieure utilisée pour le calcul de la valeur de probabilité (p) est ajustée sur la base de la fonction de correction.

13. Procédé selon l'une quelconque des revendications précédentes, **caractérisé en ce que** l'objet (3) est considéré comme un objet linéaire présentant une orientation longitudinale, et que la direction d'émission et de réception de l'au moins un capteur à ultrasons (2) ainsi que la direction dans laquelle l'information de distance (s) est mesurée sont considérées comme perpendiculaires à cette orientation longitudinale de l'objet linéaire.

14. Procédé selon l'une quelconque des revendications 1 à 12, **caractérisé en ce que** l'objet (3) est reproduit au moyen d'informations déterminées par le système de capteurs à ultrasons au cours de plusieurs cycles de mesure, sous la forme d'une ligne de contour de l'objet, et **en ce que** les informations de distance (s) sont considérées comme la différence entre la distance horizontalement mesurée des positions de capteur (P1, P2) par rapport à ladite ligne.

15. Système pour l'estimation de la hauteur d'un objet (3), comprenant un système de capteurs à ultrasons disposé sur un véhicule (1) et une unité de calcul (4), dans lequel le système est configuré pour exécuter les étapes suivantes :

a) réception d'au moins deux signaux ultrasonores par au moins un capteur à ultrasons (2) du système de capteurs à ultrasons, dans lequel un capteur à ultrasons (2) unique présente, en raison du déplacement de véhicule, différentes positions de capteur (P1, P2) par rapport à l'objet (3) ou dans lequel plusieurs capteurs à ultrasons (2) présentent, en raison du déplacement de véhicule et/ou d'un agencement différent sur le véhicule (1), différentes positions de capteur (P1, P2) par rapport à l'objet (3) ;
b) calcul d'une première information de hauteur (H), constituant une mesure de la hauteur au carré (h) de l'objet, sur la base de deux informations de distance mesurées, au moyen des au moins deux signaux ultrasonores, entre la position de capteur respective (P1, P2) et l'objet (3), ainsi que d'une information de distance (s) mesurée horizontalement entre les positions de capteur (P1, P2), par l'unité de calcul (4) ;
c) calcul de la variance de la première information de hauteur (H) par l'unité de calcul (4) ;
d) réception d'au moins un signal ultrasonore supplémentaire par l'au moins un capteur à ultrasons (2), et calcul d'une deuxième information de hauteur, constituant une mesure de la hauteur au carré (h) de l'objet, sur la base de deux informations de distance (r2, r3) mesurées, au moins partiellement au moyen de l'au moins un signal ultrasonore supplémentaire, entre la position de capteur respective (P2, P3) et l'objet (3), ainsi que d'une information de distance (s) mesurée horizontalement entre les positions de capteur ;
e) calcul de la variance de la deuxième information de hauteur ;
f) calcul d'une information de hauteur moyenne par combinaison de la première et de la deuxième information de hauteur, et d'une variance moyenne de l'information de hauteur par combinaison de la variance de la première et de la deuxième informations de hauteur ;
g) classification d'un objet détecté (3) dans une classe de hauteur par le calcul d'au moins une valeur de probabilité (p) par l'unité de calcul (4) sur la base d'une fonction de distribution normale présentant, comme valeur moyenne, l'information de hauteur moyenne et, comme variance, la variance moyenne de l'information de hauteur.

Fig. 1

Fig. 2

Fig. 3

S10

Empfangen von zumindest zwei Ultraschallsiganlen durch zumindest einen Ultraschallsensor

S11

Berechnen einer ersten Höheninformation, die ein Maß für die quadrierte Höhe des Objekts ist

S12

Berechnen der Varianz der ersten Höheninformation

S13

Empfangen zumindest eines weiteren Ultraschallsiganls durch den zumindest einen Ultraschallsensor und Berechnen einer zweiten Höheninformation, die ein Maß für die quadrierte Höhe des Objekts ist

S14

Berechnen der Varianz der zweiten Höheninformation

S15

Berechnen einer gemittelten Höheninformation durch Kombinieren der ersten und zweiten Höheninformation und einer gemittelten Varianz der Höheninformation durch Kombinieren der Varianz der ersten und zweiten Höheninformation

S16

Klassifikation eines detektierten Objekts in eine Höhenklasse durch Berechnen zumindest eines Wahrscheinlichkeitswerts basierend auf einer Normalverteilungsfunktion, die als Mittelwert die gemittelte Höheninformation und als Varianz die gemittelte Varianz der Höheninformation aufweist

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10151965 A1
- DE 102018218007 A1
- DE 102014114999 A1